# EUROPÄISCHE PATENTSCHRIFT

(11) **EP 2 462 400 B1**
(45) Veröffentlichungstag und Bekanntmachung des Hinweises auf die Patenterteilung: **04.09.2013**
(21) Anmeldenummer: 10749756.2
(22) Anmeldetag: 16.07.2010
(51) Int. Cl.: F41H 13/00, G01S 7/495, H04K 3/00

(54) **VERFAHREN ZUM AUGENSICHEREN BETREIBEN EINES STÖRLASERS IN EINEM DIRCM-SYSTEM**
METHOD FOR OPERATING A JAMMING LASER IN A DIRCM SYSTEM IN A MANNER THAT IS SAFE FOR EYES
PROCÉDÉ POUR FAIRE FONCTIONNER SANS DANGER POUR LES YEUX UN LASER DE BROUILLAGE DANS UN SYSTÈME DIRCM

(30) Priorität: 07.08.2009 DE 102009036694
(43) Veröffentlichungstag der Anmeldung: 13.06.2012
(73) Patentinhaber: EADS Deutschland GmbH, 85521 Ottobrunn (DE)
(72) Erfinder: SCHERBARTH, Stefan, 88677 Markdorf (DE)
(74) Vertreter: Meel, Thomas
(86) Internationale Anmeldenummer: PCT/DE2010/000820
(87) Internationale Veröffentlichungsnummer: WO 2011/015175

(56) Entgegenhaltungen:
- WO-A1-97/21261
- DE-A1- 4 444 636
- Rutherford, M.: "Window or aisle, chicken or beef, laser protection or SAM in the fuselage?" 31. August 2007 (2007-08-31), XP002608205 Gefunden im Internet: URL:http://news.cnet.com/8301-13639_3-9768 992-42.html [gefunden am 2010-11-03]

## Beschreibung

Die Erfindung betrifft ein Verfahren zum augensicheren Betreiben eines Störlasers in einem DIRCM-System an Bord eines Luftfahrzeugs.

Militärische wie auch zunehmend zivile Luftfahrzeuge sind durch Angriffe von Boden-Luft Lenkflugkörpern (LFK) bedroht. Die am weitesten verbreiteten LFK sind die sogenannten MANPADS (Man portable air defense system) mit im infraroten Spektralbereich arbeitendem Suchkopf.

Eine mögliche Gegenmaßnahme ist das Aussenden gerichteter, mit einer geeigneten Störsequenz modulierten IR-Laserstrahlung gegen den anfliegenden LFK, um dessen Suchkopf zu stören und vom Ziel abzubringen. Solche Systeme werden als DIRCM-Systeme (DIRCM - Direct Infrared Counter Measures) bezeichnet und sind z.B. aus der DE 4402855 A1 oder US 6369885 B1 bekannt.

Um wirksam zu sein, muss die vom DIRCM-System erzeugte Störstrahlungsintensität deutlich höher sein als die Infrarotabstrahlung des zu schützenden Flugzeuges. Die Verwendung zu geringer Störintensitäten ist kontraproduktiv, da es dem anfliegenden LFK die Zielverfolgung erleichtert.

Weiterhin muss die Störstrahlung innerhalb des vom Suchkopf des anfliegenden LFK detektierten Wellenlängenbereichs liegen. Da die verbreiteten MANPADS verschiedene Spektralbereiche des infraroten Spektrums nutzen muss daher ein entsprechend weiter Bereich diese Spektrums in der Störstrahlung des DIRCM enthalten sein.

Zur Erzeugung dieser Störstrahlung benutzt man üblicherweise ein mit einer geeigneten Störsequenz modulierter Laser, welcher in der Lage ist, gleichzeitig mehrere, über das Infrarotspektrum verteilte Wellenlängen abzustrahlen.

Die erforderlichen hohen Laserintensitäten führen zu einem Lasersicherheitsproblem. Der Augensicherheitsbereich eines DIRCM-Systems beträgt zum Beispiel gemäß der europäischen Laserschutzverordnung EN 60825-1 bis zu mehrere hundert Meter. Beim Betrieb des DIRCM-Systems muss daher sichergestellt werden, dass sich keine Personen ohne Laserschutz innerhalb dieser Lasersicherheitsentfernung aufhalten. Dies führt zu Zulassungs- und Nutzungseinschränkungen eines DIRCM-Systems gerade für Situationen wie Start und Landung, bei welchen die potentielle Bedrohung am höchsten, der Schutz durch ein DIRCM-System somit am wichtigsten ist.

Um die Einhaltung des vorgeschriebenen Lasersicherheitsbereichs sicherzustellen, sind Nutzungseinschränkungen unter Zuhilfenahme zusätzlicher Sensorik vorgesehen. So wird zum Beispiel gemäß dem Standard ANSI Z 136.6-2005 Kap. 4.2.7.2 und Kap. 10.5.9 (Laser Institute of America) der Laser ausgeschaltet, wenn die Flughöhe des Luftfahrzeuges niedriger als die NOHD (Nominal Ocular Hazard Distance) bzw. NOHD extended des Lasers ist. Die Flughöhe wird üblicherweise in Luftfahrzeugen durch einen Radarhöhenmesser bestimmt. Dieses Verfahren hat den Nachteil, dass unterhalb einer dem NOHD bzw. dem NOHD extended entsprechenden Höhe kein Schutz des Luftfahrzeugs durch ein DIRCM gegeben istgerade dann, wenn die Bedrohung am größten ist.

Bei militärischen Anwendungen und Zulassungen liegt es in der Regel in der Verantwortung des Piloten, die Aktivierung des Lasersystem zu sperren, wenn er nicht ausschließen kann, dass Personen innerhalb des Lasersicherheitsbereichs gefährdet werden können. Diese Vorgehensweise ist jedoch für zivile Anwendungen und Zulassungen nicht akzeptabel. Da viele militärische Luftfahrzeuge mittlerweile auch zivil zugelassen und eingesetzt werden ist diese Vorgehensweise auch für militärische Luftfahrzeuge von großem Nachteil.

Der Erfindung liegt die Aufgabe zugrunde, ein Verfahren zu schaffen, welches einen augensicheren Betrieb eines DIRCM-Systems ermöglicht, wobei eventuelle sich daraus ergebende Nutzungsbeschränkungen des DIRCM-Systems möglichst gering gehalten werden sollen. Weiterhin soll der apparative Aufwand klein gehalten werden. Insbesondere soll das Verfahren auch für DIRCM anwendbar sein, welche in ihrer Konzeption nicht über die Fähigkeit verfügen, Rückreflexe des selbst ausgesandten Laserlichtes zu empfangen (open-loop DIRCM)

Diese Aufgabe wird mit dem Gegenstand des Patentanspruchs 1 gelöst. Vorteilhafte Ausführungen sind Gegenstand von Unteransprüchen.

Das abzusichernde DIRCM-System habe auf Grund seiner Optik und der für die Funktion erforderlichen Intensitäten eine Lasersicherheitsentfernung von einigen hundert Metern (z.B. NOHD extended gemäß der EN 60825-1) bei einer operationell erforderlichen maximalen Einsatzdauer des Lasers von mehreren Sekunden. Die sich aus diesen Eigenschaften ergebende feste Lasersicherheitsentfernung wird im Folgenden "originäre Lasersicherheitsentfernung" des DIRCM-Systems genannt.

Der Störlaser wird erfindungsgemäß mit einer Sperrvorrichtung versehen, welche die Aussendung der Laserstrahlung unterbinden kann. Diese Sperrvorrichtung kann über die bereits im DIRCM-System vorhandene Modulationseinrichtung des Laserstrahls wirken oder auch unabhängig davon, z. B. als selektive mechanische Strahlblockierung realisiert sein.

Weiterhin wird das DIRCM System erfindungsgemäß mit einer Messvorrichtung versehen, welche jeweils fortlaufend die seit Bekämpfungsbeginn des DIRCM abgestrahlte Laserenergie ermittelt. Dies kann zum Beispiel durch die üblicherweise bei der Laserquelle vorhandenen Monitordioden oder durch fortlaufende Auswertung des Modulationssignals erfolgen.

Auf Grund der bei einem DIRCM eingesetzten Laserintensitäten und -modulationen ergibt sich bei der Bestimmung der erforderlichen Laserschutzentfernung D, dass diese gemäß der EN 60825-1 eine direkte, monoton steigende Funktion der insgesamt seit Bekämpfungsbeginn abgestrahlten Energie ist, also D = D(Energie). Umgekehrt kann auch zu jeder einzuhaltenden Laserschutzentfernung D der mögliche Maximalwert für die abgestrahlte Energie bestimmt werden, für welche die zulässige Lasereinstrahlung in der Sicherheitsentfernung D gemäß der EN 60825-1 nicht überschritten wird.

Der augensichere Betrieb des DIRCM Systems wird nun erfindungsgemäß dadurch erreicht, dass abhängig von der Flughöhe des mit dem DIRCM ausgestatteten Luftfahrzeuges der mögliche Maximalwert für die abgestrahlte Energie so bestimmt wird, dass die entsprechende Laserschutzentfernung kleiner als die aktuelle, z.B. von einem Radarhöhenmesser ermittelte Flughöhe über Grund ist. Mittels der Sperrvorrichtung wird nun die Laserabstrahlung unterbunden, wenn der gemessenen Wert der Energie den für die Flughöhe ermittelten Maximalwert erreicht.

Im vorstehenden Beispiel wurde der Maximalwert der zulässigerweise abgestrahlten Energie in Abhängigkeit von der aktuellen Flughöhe bestimmt. Generell gilt, dass der Maximalwert der abgestrahlten Energie abhängig vom Flugzustand des Luftfahrzeugs sein kann. Dies ist z.B. der Fall, wenn für verschiedene Flugphasen jeweils individuelle Sicherheitsentfernungen D vorgegeben sind. So ist sind zum Beispiel in der zivilen Luftfahrt die Start- und Landbahnen bis zu einer bestimmte Breite Sicherheitszonen, in welcher sich keine Personen aufhalten. Sowie ein Flugzeug nun über der Landbahn schwebt wäre die abzusichernde Sicherheitsentfernung D z.B. die kürzeste Entfernung zu Grenze dieser Sicherheitszone. Bei einer Breite der Sicherheitszone von jeweils 30 m rechts und links der Piste und einer Flughöhe von 20 m ergibt sich z.B. D = (30² + 20²)^{1/2} = 36 m.

Das erfindungsgemäß betriebene DIRCM System erfüllt nun zu jeder Zeit die Forderungen der ANSI Z 136.6-2005 Kap. 4.2.7.2 und Kap. 10.5.9 (Laser Institute of America), d. h. der Betrieb dieses Systems ist augensicher. Dies wird allerdings durch die Einschränkung erkauft, dass die Laseremission und damit auch eine eventuelle Bekämpfung eines angreifenden LFK eventuell aus Lasersicherheitsgründen eingestellt werden muss.

Auf Grund des erfindungsgemäßen Verfahrens ist diese Nutzungseinschränkung jedoch minimal. Im obigen Beispiel ist die Mindesthöhe, unterhalb der eine Bekämpfung nicht mehr zulässig ist, deutlich geringer als die originäre Lasersicherheitsentfernung eines nicht erfindungsgemäß ausgestatteten DIRCM.

Ein DIRCM-System strahlt üblicherweise mehrerer Wellenlängen im Infraroten ab. Bei der Berechnung der originären Lasersicherheitsentfernung muss daher gemäß der EN 60825-1 für Wellenlängen welche durch üblich optische Instrumente wie z.B. Ferngläser abgebildet werden, der NOHD-extended berücksichtigt werden. Diese Wellenlängen im nahen Infrarot werden im Folgenden Spektralbereich 1 genannt. Für längere Wellenlängen des mittleren und fernen Infrarot ist gemäß der EN 60825-1 lediglich der NOHD zu berücksichtigen, welcher deutlich geringer als der NOHD-extended ist. Dieser Wellenlängenbereich wird im Folgenden Spektralbereich 2 genannt.

In einer vorteilhaften Ausführung der Erfindung werden die von der Laserschutzverordnung unterschiedenen Spektralbereiche 1 und 2 einer separaten Behandlung unterzogen, um die aus Laserschutzgründen eventuell notwendige Nutzungseinschränkung weiter zu minimieren. Dies wird anhand des folgenden Ausführungsbeispiels näher erläutert.

Der Störlaser wird bei einer solchen Ausführung mit je einer Sperrvorrichtung für die Spektralbereiche 1 und 2 versehen, welche jeweils unabhängig voneinander die Aussendung der Laserstrahlung unterbinden können. Diese Sperrvorrichtungen können über die bereits im DIRCM-System vorhandene Modulationseinrichtung des Laserstrahls wirken oder auch unabhängig davon, z. B. als selektive mechanische Strahlblockierung realisiert sein.

Entsprechend wird das DIRCM System nun mit zwei Messvorrichtungen versehen, welche unabhängig für die einzelnen Spektralbereiche 1 und 2 jeweils fortlaufend die seit Bekämpfungsbeginn des DIRCM abgestrahlte Laserenergie ermitteln. Dies kann durch die bereits erwähnten Monitordioden oder durch fortlaufende Auswertung des Modulationssignals erfolgen. Die ermittelten Laserenergien seien im Folgenden Energie 1 und Energie 2 genannt.

Auf Grund der bei einem DIRCM eingesetzten Laserintensitäten und -modulationen ergibt sich bei der Bestimmung der erforderlichen Laserschutzentfernung D, dass diese gemäß der EN 60825-1 eine direkte, monoton steigende Funktion der insgesamt seit Bekämpfungsbeginn abgestrahlten Energie 1 und Energie 2 ist, also D=D (Energie 1 ,Energie 2). Umgekehrt können auch zu jeder einzuhaltenden Laserschutzentfernung D die möglichen Maximalwertepaare für Energie1 und Energie 2 bestimmt werden, für welche zusammengenommen die zulässige Lasereinstrahlung in der Sicherheitsentfernung D gemäß der EN 60825-1 nicht überschritten werden.

Der augensichere Betrieb des DIRCM Systems wird gemäß dieser Ausführung dadurch erreicht, dass abhängig von der Flughöhe des mit dem DIRCM ausgestatteten Luftfahrzeuges die möglichen Maximalwertepaare für Energie 1 und Energie 2 so bestimmt werden, dass die Laserschutzentfernung kleiner als die aktuelle, z.B. von einem Radarhöhenmesser ermittelte Flughöhe über Grund ist. Mittels der Sperrvorrichtungen wird nun die Laserabstrahlung im Spektralbereich 1 unterbunden, wenn der gemessene Wert für Energie 1 den für die Flughöhe ermittelten Maximalwert erreicht, die Laserabstrahlung im Spektralbereich 2 wird unterbunden, wenn der gemessene Wert für Energie 2 den für die Flughöhe ermittelten Maximalwert erreicht.

Die Maximalwerte für die Energie 1 und die Energie 2 stellen sicher, dass die gesamte Bestrahlung in der vorgegebenen Sicherheitsentfernung D den gemäß der Laserschutzverordnung EN 60825-1 zulässigen Wert nicht überschreitet. Bei der Ermittlung dieses zulässigen Gesamt-Bestrahlungswertes gemäß Laserverordnung gehen die in den beiden betrachteten Spektralbereichen abgestrahlten Energien entsprechend den Vorgaben der Laserschutzverordnung mit unterschiedlichen Wichtungsfaktoren ein.Eine Aufteilung des zulässigen Gesamt-Bestrahlungswertes auf die beiden Spektralbereiche kann insbesondere nach operationellen Einsatzbedingungen festgelegt werden, z.B. nach dem wahrscheinlichen Typ der zu bekämpfenden LFKs, etc.

Die beiden Maximalwerte für Energie 1 und Energie 2 werden vorab entfernungsabhängig so festgelegt, dass die Abstrahlung im Spektralbereich 1 derart vor der des Spektralbereiches 2 unterbunden wird, dass noch ein ausreichendes augensicheres Abstrahlungsbudget für eine Bekämpfung im Spektralbereich 2 zur Verfügung steht.

Für geringe Flughöhen kann der Grenzwert für die Energie 1 auch bei 0 liegen, so dass eine Bekämpfung aus Laserschutzgründen nur noch im Spektralbereich-2 möglich ist.
Für noch geringere Flughöhen wird auch der Grenzwert für Energie-2 bei 0 liegen, so dass aus Laserschutzgründen keinerlei Bekämpfung möglich ist. Bei geeigneter optischer Auslegung eines DIRCM kann diese Flughöhe jedoch sehr gering gehalten werden (im Bereich weniger Meter).

Auf Grund der unterschiedlichen Behandlung der beiden Spektralbereiche wird die Nutzungseinschränkung, die aufgrund Lasersicherheitsgründen notwendig wird, erheblich minimiert und betrifft fast ausschließlich die Bekämpfung im Spektralbereich 1, welche bei Start und Landung erst ab bzw., bis zu einer geringen Mindesthöhe möglich ist. Diese Mindesthöhe ist insbesonders deutlich geringer als die originäre Lasersicherheitsentfernung eines nicht erfindungsgemäß ausgestatteten DIRCM.

Ein genereller Vorteil des erfindungsgemäßen Verfahrens ist es, dass die tatsächlich abgestrahlten Energien einer Störsequenz zur Bestimmung der Abschaltgrenzen verwendet werden. Bei einem geringen Dutycycle einer Störsequenz führt dies zu einer deutlich späteren Abschaltung, als wenn zur Festlegung der Abschaltgrenzen bzw. der Lasersicherheitsentfernung die maximal mögliche Abstrahlleistung des Lasers herangezogen wird. Hierdurch wird ebenfalls eine Minimierung der Nutzungseinschränkung erreicht.

Da ohne Ansprechen der Sperrvorrichtung keinerlei Änderung der Ausstrahlintensität und der Modulation des Störlasers vorgenommen wird, liegen keine weiteren Funktionseinschränkungen des erfindungsgemäß gesicherten DIRCM-Systems vor.

Der apparative Aufwand für die Durchführung des erfindungsgemäßen Verfahrens kann klein gehalten werden.

Des Weiteren ist das erfindungsgemäße Verfahren auch für DIRCM anwendbar, welche in ihrer Konzeption nicht über die Fähigkeit verfügen, Rückreflexe des selbst ausgesandten Laserlichtes zu empfangen (open-loop DIRCM).

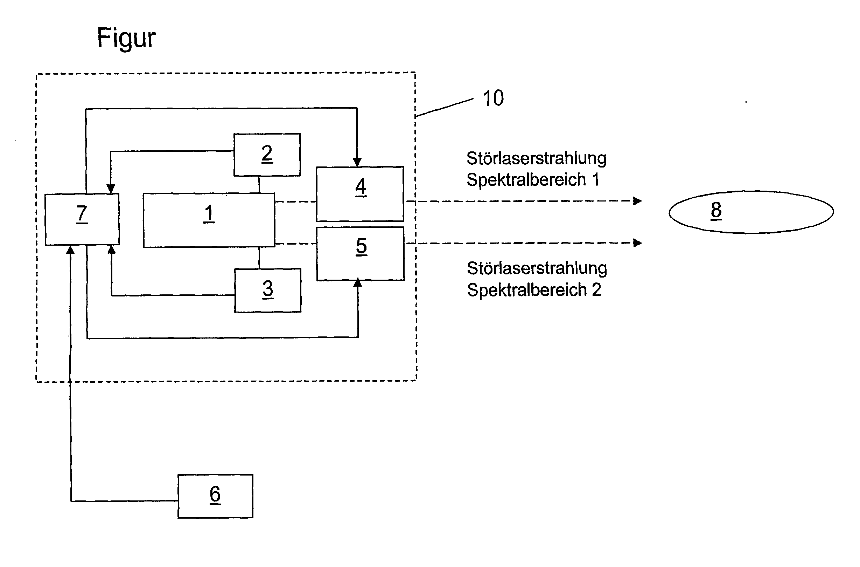

Die Erfindung wird anhand eines Ausführungsbeispiels unter Bezugnahme auf eine Figur näher erläutert. Sie zeigt in schematischer Darstellung die für die Durchführung des erfindungsgemäßen Verfahrens relevanten Komponenten eines DIRCM-Systems 10. Die Figur zeigt eine Ausführung, bei der die beiden Spektralbereiche 1 und 2 unterschieden werden.

Das dargestellte DIRCM-System umfasst den Störlaser 1 zur Bekämpfung eines anfliegenden LFK 8. Die Flughöhe über Grund wird fortlaufend z.B. durch einen Radarhöhenmesser 6 ermittelt. Die Messvorrichtungen 2 und 3 ermitteln fortlaufend die seit Bekämpfungsbeginn abgestrahlte Energie im Spektralbereich 1 und 2. An Hand dieser Daten erzeugt nun die Steuereinheit 7 Abschaltsignale für die beiden Sperrvorrichtungen 4 und 5 zur Abschaltung der Laseremission im Spektralbereich 1 und 2 des Lasers, so dass zu keinem Zeitpunkt die maximal zulässigen Bestrahlung gemäß der EN 60825-1 am Boden überschritten wird.

Die Abschaltung erfolgt hierbei durch die Steuereinheit 7 entsprechend vorher festgelegten entfernungsabhängigen Grenzwerten derart, dass bereits vor Erreichen der zulässigen Bestrahlung am Boden die Sperrvorrichtung 4 ausgelöst wird, so dass noch ein ausreichendes Budget an zulässiger Bestrahlung für eine Bekämpfung im Spektralbereich 2 zur Verfügung steht, bevor auch diese durch die Sperrvorrichtung 5 unterbrochen wird.

Die Sperrvorrichtungen 4 und 5 wirken gemäß der in der Figur gezeigten Ausführung, in dem sie direkt auf den Laserstrahl z.B. in Form einer Strahlunterbrechung einwirken. Alternativ kann die Sperrvorrichtung auch über einen Eingriff in die Modulationsvorrichtung des Lasers erfolgen.

## Patentansprüche

1. Verfahren zum augensicheren Betreiben eines Störlasers (1) in einem DIRCM-System (10) an Bord eines Luftfahrzeugs, **dadurch gekennzeichnet, dass**
- die seit Bekämpfungsbeginn abgestrahlte Energie des Störlasers (1) bestimmt wird,
- abhängig vom Flugzustand des Fluggeräts ein Grenzwert der zulässigen Energieabstrahlung bestimmt wird, wobei der Grenzwert einer für diesen Flugzustand einzuhaltenden Laserschutzentfernung entspricht, und
- bei Erreichen des Grenzwertes die Abstrahlung unterbunden wird.

2. Verfahren nach Anspruch 1, **dadurch gekennzeichnet, dass**
- die seit Bekämpfungsbeginn abgestrahlte Energie des Störlasers (1) separat für das nahe und mittlere/ferne Infrarot bestimmt wird,
- abhängig vom Flugzustand des Fluggeräts zwei separate Grenzwerte der zulässigen Energieabstrahlung für das nahe und für das mittlere/ferne Infrarot bestimmt werden, wobei die Summe der Grenzwerte einer für diesen Flugzustand einzuhaltenden Laserschutzentfernung entspricht,
- bei Erreichen des Grenzwertes für das nahe Infrarot die Abstrahlung im nahen Infrarot unterbunden wird, und
- bei Erreichen des Grenzwertes für das mittlere/ferne Infrarot die Abstrahlung im mittleren/fernen Infrarot unterbunden wird.

3. Verfahren gemäß Anspruch 2, **dadurch gekennzeichnet, dass**
der Grenzwert für das nahe Infrarot so klein gewählt wird, dass nach Unterbindung der Abstrahlung im nahen Infrarot noch eine augensichere Abstrahlung des Störlasers (1) im mittleren/fernen Infrarot über einige Sekunden möglich ist.

4. Verfahren nach einem der vorangehenden Ansprüche, **dadurch gekennzeichnet, dass** es sich bei dem Flugzustand des Fluggeräts, in dessen Abhängigkeit der oder die Grenzwerte der zulässigen Energieabstrahlung bestimmt werden, um die Flughöhe des Fluggeräts handelt.

## Claims

1. Method for operating a jamming laser (1) in a DIRCM system (10) on board an aircraft in a manner that is safe for eyes, **characterized in that**
- the energy radiated by the jamming laser (1) since the start of combat is determined,
- depending on the aircraft's flight condition, a limit is determined for the permitted energy radiation, wherein the limit corresponds to a laser protection distance to be observed for this flight condition, and
- when the limit is reached, radiation is suppressed.

2. Method according to Claim 1, **characterized in that**
- the energy radiated by the jamming laser (1) since the start of combat is determined separately for the near- and mid-/far-infrared range,
- depending on the aircraft's flight condition, two separate limits are determined for the permitted energy radiation for the near- and mid-/far-infrared range, wherein the total of the limits corresponds to a laser protection distance to be observed for this flight condition,
- when the limit is reached for the near-infrared range, radiation in the near-infrared range is suppressed, and
- when the limit is reached for the mid-/far-infrared range, radiation in the mid-/far-infrared range is suppressed.

3. Method according to Claim 2, **characterized in that** the limit for the near-infrared range is small enough for eye-safe radiation by the jamming laser (1) in the mid-/far-infrared range to still be possible for a few seconds after radiation has been suppressed in the near-infrared range.

4. Method according to one of the preceding claims, **characterized in that** the flight condition of the aircraft, depending on which the limit or limits of the permitted energy radiation is/are determined, is the altitude of the aircraft.

## Revendications

1. Procédé destiné à faire fonctionner sans danger pour les yeux un laser de brouillage (1) dans un système DIRCM (10) à bord d'un aéronef, **caractérisé en ce que**
- l'énergie émise par le laser de brouillage (1) depuis le début du combat est déterminée,
- une valeur limite de l'émission d'énergie admissible est déterminée en fonction de l'état de vol de l'engin volant, la valeur limite correspondant à une distance de sécurité laser à respecter pour cet état de vol, et
- l'émission est arrêtée lorsque la valeur limite est atteinte.

2. Procédé selon la revendication 1, **caractérisé en ce que**
- l'énergie émise par le laser de brouillage (1) depuis le début du combat est déterminée séparément pour l'infrarouge proche et l'infrarouge moyen/lointain,
- deux valeurs limites séparées de l'émission d'énergie admissible sont déterminées pour l'infrarouge proche et pour l'infrarouge moyen/lointain en fonction de l'état de vol de l'engin volant, la somme des valeurs limites correspondant à une distance de sécurité laser à respecter pour cet état de vol,
- l'émission dans l'infrarouge proche est arrêtée lorsque la valeur limite pour l'infrarouge proche est atteinte, et
- l'émission dans l'infrarouge moyen/lointain est arrêtée lorsque la valeur limite pour l'infrarouge moyen/lointain est atteinte.

3. Procédé selon la revendication 2, **caractérisé en ce que** la valeur limite pour l'infrarouge proche est sélectionnée de manière à être suffisamment faible pour qu'une émission du laser de brouillage (1) sans danger pour les yeux dans l'infrarouge moyen/lointain soit encore possible pendant quelques secondes après l'arrêt de l'émission dans l'infrarouge proche.

4. Procédé selon l'une quelconque des revendications précédentes, **caractérisé en ce que** l'état de vol de l'engin volant en fonction duquel la ou les valeur(s) limite(s) de l'émission d'énergie admissible est ou sont déterminée(s) est l'altitude de vol de l'engin volant.
